## Europäisches Patentamt

## European Patent Office

## Office européen des brevets

(19)

(11) Veröffentlichungsnummer: **0 006 420**
**B1**

(12) **EUROPÄISCHE PATENTSCHRIFT**

(45) Veröffentlichungstag der Patentschrift: **10.03.82**

(21) Anmeldenummer: **79100757.8**

(22) Anmeldetag: **14.03.79**

(51) Int. Cl.³: **C 22 B 5/10, C 22 B 4/00, C 21 B 11/10, C 01 B 25/02**

(54) **Kohlenstoffträger für elektrothermische Reduktionsprozesse und Verfahren zu dessen Herstellung.**

(30) Priorität: **01.04.78 DE 2814106**

(43) Veröffentlichungstag der Anmeldung:
**09.01.80 Patentblatt 80/1**

(45) Bekanntmachung des Hinweises auf die Patenterteilung:
**10.03.82 Patentblatt 82/10**

(84) Benannte Vertragsstaaten:
**DE FR GB IT NL**

(56) Entgegenhaltungen:
**DE - A - 1 962 567**
**DE - B - 1 143 029**
**FR - A - 1 352 363**
**GB - A - 717 576**
**GB - A - 781 108**
**US - A - 2 127 632**
**US - A - 2 800 396**
**US - A - 3 923 961**

(73) Patentinhaber: **HOECHST AKTIENGESELLSCHAFT**
**Postfach 80 03 20**
**D-6230 Frankfurt/Main 80 (DE)**

(72) Erfinder: **Diskowski, Herbert, Dr.**
**Fasanenaue 6**
**D-5042 Erftstadt (DE)**
Erfinder: **Ebert, Hans, Dr.**
**Von Bodelschwingh Weg 53**
**D-5042 Erftstadt (DE)**
Erfinder: **Kern, Winfried, Dr.**
**Am Wachberg 1**
**D-5042 Erftstadt (DE)**
Erfinder: **Rabowsky, Hans, Dr.**
**Alleestrasse 6**
**D-5030 Hürth (DE)**
Erfinder: **Schäfgen, Bernhard**
**Am Heideberg 17**
**D-5030 Hürth (DE)**
Erfinder: **Stendel, Joachim, Dr.**
**Schlaunstrasse 8**
**D-5040 Brühl (DE)**

# 0 006 420

## Kohlenstoffträger für elektrothermische Reduktionsprozesse und Verfahren zu dessen Herstellung

Die vorliegende Erfindung betrifft Kohlenstoffträger für elektrothermische Reduktionsprozesse, die unter Bildung einer Schlacke verlaufen sowie Verfahren zur Herstellung dieser Kohlenstoffträger.

Aus der US—A—2 800 396 ist ein elektrothermisches Verfahren zur Gewinnung von elementarem Phosphor bekannt, bei dem der gesamte zur elektrothermischen Phosphorgewinnung nötige Rohstoff, bestehend aus Phosphat, Kies und Koks zunächst fein gemahlen, gemischt und dann in pelletierter Form eingesetzt wird.

Es handelt sich hier um einen Prozeß, bei dem ein Bad aus flüssiger Schlacke vorgelegt wird, dem das pelletierte Rohstoffgemisch von der Seite her zugeführt wird. In diesem Schmelzbad wird die Umsetzung zu Phosphor durchgeführt. Die dazu benötigte Wärme wird über von der Mitte her in die Schmelze eintauchende Elektroden durch Lichtbogen und Widerstandsheizung eingebracht. Da hierbei der seitwärts eingetragene Rohstoff durch Verbrennen von Heizstoff, z.B. dem beim Prozeß einstehendem Kohlenoxid, vorher auf ca. 1200°C aufgeheizt wird, kann somit die für das Aufheizen des Möllers sonst erforderliche elektrische Energie eingespart werden. Dadurch, daß bei diesem vorgeschalteten Prozeß der Vorheizung die Rohstoffe bis zur beginnenden Erweichung erhitzt werden und dieser Prozeß in einem Drehrohrofen stattfindet, kommt es zu einer Pelletierung des Möllers.

Im Gegensatz zum normalen Elektroreduktionsprozeß geht in diesem speziellen Falle der Strom nicht durch die Rohstoffschüttung im Ofen. Normalerweise sind die Elektroden eingebettet in den stückigen, körnigen Rohstoffen und der elektrische Strom entwickelt seine Wärme in dem Material direkt beim Durchfließen des Möllers. Dazu darf die Rohstoffschüttung nur einen bestimmten, nicht zu hohen Widerstand haben. Für die Leitfähigkeit des Möllers aber ist im wesentlichen der Kohlenstoffträger ausschlaggebend. Formkörper, die neben Koks Phosphat und Kies enthalten, haben für den normalen Prozeß einen zu hohen Widerstand.

Für die Durchführung von Reduktionsprozessen, die in Gegenwart von Kohlenstoff verlaufen (Hochofenprozeß, elektrothermische Verfahren) und bei denen üblicherweise die Möllerkomponenten nicht vorerhitzt und pelletiert werden, ist die Reaktivität des Kohlenstoffs bzw. des den Kohlenstoff liefernden Materials von entscheidender Bedeutung.

Unter der Reaktivität wird die Fähigkeit eines kohlenstoffhaltigen Materials verstanden, unter festgelegten Reaktionsbedingungen eine bestimmte Reaktionsgeschwindigkeit zu bewirken.

Die sich in der Reaktionsgeschwindigkeit auswirkende Reaktivität eines Kokses wird seit langem in der Eisen- und Stahlindustrie zur Beurteilung von Hochofenkoks benutzt. Als Testreaktion dient die Boudouard-Reaktion, die Umsetzung von $CO_2$ mit Koks zu CO. Eine Kokssorte ist umso reaktiver, je mehr $CO_2$ an Koks einer bestimmten Menge und Körnung zu einer bestimmten Zeit zu CO umgesetzt wird (K. Hedden, Brennstoff-Chemie 41, Seite 193 (1960)).

Es hat sich nun gezeigt, daß die dabei gewonnen Ergebnisse sich nicht auf andere, insbesondere elektrothermische Prozesse übertragen lassen. Die Testreaktion muß offenbar eng an die Bedingungen der Reduktionsreaktion des spezifischen Prozesses angelehnt sein.

Die aus ihr ermittelte Reaktivität muß auf die Verhältnisse bezogen werden, wie sie in der in Reaktion befindlichen Mischung des Ofenmöllers vorliegen. Sie muß unmittelbar vom zeitlichen Umsatz in einem bestimmten Möllervolumen ausgehen und sich auf die darin in Form von Kohlenstoffträger-Korn vorliegende geometrische C-Oberfläche beziehen. Sie gibt somit die Größe der Produktmenge an, die pro Zeiteinheit an einer bestimmten geometrischen Oberfläche eines Kohlenstoffträgers entsteht.

Für diese effektive Reaktivität gilt

$$R_{eff} = \frac{\alpha}{(\% \ C \ /100) \, \rho_0}$$

In dieser Gleichung stellt $\alpha$ die spezifische Reaktivität des eingesetzten Kohlenstoffmaterials dar. Sie wird ermittelt aus der Reaktionsgeschwindigkeit an einer bestimmten geometrischen Oberfläche des Kohlenstoffmaterials. % C gibt den Gehalt des Kohlenstoffträgers an Kohlenstoffmaterial an und $\rho_0$ das spezifische Gewicht dieses Kohlenstoffträgers.

Überraschenderweise wurde gefunden, daß Kohlenstoffträger für elektrothermische Reduktionsprozesse, die unter Bildung einer Schlacke verlaufen, eine erhöhte Reaktionsfähigkeit aufweisen, wenn sie 5 bis 80 Gewichts%, vorzugsweise 20 bis 50 Gewichts%, der bei dem betreffenden Reduktionsprozeß anfallenden Schlacke enthalten.

Es ist vorteilhaft, wenn diese Schlacke in einer Korngröße kleiner als 6 mm, vorzugsweise bis 1 mm, vorliegt. Zweckmäßigerweise liegen diese Kohlenstoffträger in Gestalt von Formlingen vor und enthalten zusätzlich zu der Schlacke noch ein Bindemittel zur Erhöhung ihrer Festigkeit.

Diese Kohlenstoffträger werden erhalten, indem man eine im wesentlichen aus Kohlenstoff bestehende Komponente mit der bei dem Reduktionsprozeß gebildeten Schlacke vermischt.

Es empfiehlt sich, durch Pelletisieren oder Brikettieren der Mischung aus der Kohlenstoffkomponente und der Schlacke Formkörper herzustellen. Durch Verwendung von Bindemitteln läßt sich die Festigkeit der Formkörper erhöhen. Als Bindemittel sind geeignet: Weichpech, Steinkohlenpech, Sulfitablauge oder insbesondere Alkaliwasserglas.

Empfehlenswert ist es, als Kohlenstoffkomponente Koksgrus einzusetzen, und zwar mit einer Korngrößer kleiner als 6 mm, vorzugsweise mit einer Korngröße bis 1 mm.

Ebenso ist es vorteilhaft, wenn die Schlacke eine Korngröße kleiner als 6 mm, vorzugsweise eine Korngröße bis 1 mm, aufweist.

Zur Vereinfachung der Herstellung ist es auch möglich, daß man zunächst Kohle mit der Schlacke vermischt und die erhaltene Mischung anschließend verkokt, wobei man die Schlacke in einer solchen Menge einsetzt, daß das nach der Verkokung erhaltene Produkt 5 bis 80 Gewichts% an Schlacke enthält.

Durch Verwendung von Kohlenstoffträgern mit erhöhter Reaktivität kann die Prozessführung von elektrothermischen Reduktionsprozessen in positiver Weise beeinflußt werden.

Infolge der höheren Reaktivität des Kohlenstoffträgers läuft der Prozess bereits bei niederen Temperaturen mit ausreichender Geschwindigkeit ab. Überhitzungen, mit den daraus resultierenden bekannten Nachteilen für die Prozeßführung, werden vermieden.

Zudem wird der Elektrodenabbrand herabgesetzt und die Elektrodenbruchgefahr, die durch zu rasches und zu häufiges Nachsetzen der Elektroden hervorgerufen wird, beseitigt. Ferner wird durch die erfindungsgemäßen Kohlenstoffträger eine höhere Reduktionsausbeute erreicht.

Die nachfolgenden Versuche sollen das Wesen der Vorliegenden Erfindung am Beispiel der Reduktion von Phosphaterz verdeutlichen.

Durchführung der Versuche:

a) Allgemeines:

Die Versuche dienten zur Bestimmung der effektiven Reaktivität $R_{eff}$ von Kohlenstoffträgern für den elektrothermischen Reduktionsprozeß. Die Bestimmungen gezogen sich auf die elektrothermische Herstellung von Phosphor. Test-reaktion war also die Phosphatreduktion mit Hilfe von Koks. Als unmittelbares Versuchsergebnis wurde die spezifische Reaktivität $\alpha$ erhalten, aus der mit Hilfe des spezifischen Gewichtes des Kohlenstoffträgers $\rho_o$ und des Kohlenstoffmaterialanteiles

$$\frac{\%C}{100}$$

im Kohlenstoffträger die effektive Reaktivität ermittelt worden ist.

Zur Bestimmung der spezifischen Reaktivität $\alpha$ wurde die Geschwindigkeit der Phosphatreduktion durch Umsetzung von Kola-Phosphat mit einem Kohlenstoffträger gemessen.

Phosphat und Kohlenstoffträger wurden als zylindrische Preßlinge bzw. Formkörper verwendet. Die Reaktion wurde an der Berührungsfläche aufeinanderliegender Zylinderflächen zwischen Phosphat und Kohlenstoffträger herbeigeführt. Auf diese Fläche wurde der stündliche Umsatz bezogen. Während der Versuchsdauer wurde die Temperatur konstant gehalten.

b) Apparatur:

Zur Durchführung der Versuche wurde die Apparatur gemäß der nachfolgenden Figur verwendet. Als Heizung diente ein beweglich angeordneter Silitrohrofen 1, der bis auf 1600°C aufgeheizt werden konnte. Im Ofen 1 befand sich ein keramisches Rohr 2, das an seinen Enden mit Glasteilen 3 verschmolzen war. Nach oben war das Rohr 1 mit einer planparallelen Glasplatte 4 zur Beobachtung und Temperaturmessung verschlossen. Im seitlichen Ansatz 5 war ein Anschluß 6 für Spülgas ($N_2$) vorgesehen. Zur Aufnahme der Proben diente ein Grafittiegel 7, der seinerseits auf Scherben von keramischem Material 8 saß. Das Ausgangsrohr 9 war zum Halt der keramischèn Scherben verjüngt und endete in einer Waschflasche 10. Drei weitere Waschflaschen (nicht gezeichnet) waren noch nachgeschaltet. Die Waschflaschen waren mit konzentrierter Salpetersäure und etwas elementarem Brom gefüllt.

c) Versuchsdurchführung:

An Material wurde eingesetzt:
1. Aus Koksstücken der Körnung 10/25 mm hergestellte Zylinder ∅ 1,2 cm (89% C)
2. Koksgrus < 1 mm (85% C)
3. Kola-Phosphaterz (39,2% $P_2O_5$)
4. Wasserglas (352 g/l $SiO_2$, 144 g/l NaOH)
5. Sulfitablauge (45% Trockensubstanz)
6. Phosphorofenschlacke < 0,1 mm (42,6% $SiO_2$; 47,2% CaO; 2,7% F; 0,84% P)
Die Oberfläche des Kohlenstoffmaterials betrug in allen Fällen 1,13 cm².

Zur Herstellung der Preßlinge aus Koksgrus und Schlacke unter Verwendung der flüssigen Bindemittel Wasserglas. Sulfitablauge oder einem Gemisch von beiden, wurde Koksgrus (< 1 cm) mit gemahlener Schlacke (< 0,1 cm) vermischt, mit flüssigem Bindemittel befeuchtet und verpreßt. Der Stempeldurchmesser betrugt 12 mm, der Druck ca. 3500 atü. Die Preßlinge wurden bei 200°C getrocknet.

Die Preßlinge aus Kolaerz wurden erhalten durch Verpressen des mit Wasser angefeuchteten Rohmaterials (80% 0,1 mm). Reaktionspartner der Kohlenstoffträger waren in jedem Fall Kolaphosphat-Preßlinge.

Um die Reaktivität von Grafit zu bestimmen (Versuch Nr. 1 der Tabelle), wurde als Testmaterial der Boden eines Grafittigels benutzt. Die Reaktion fand statt mit einem aufliegenden Kola-Preßling.

Sonst wurde der Kohlenstoffträger zuunterst in den Tiegel gestellt und darauf der Kola-Preßling gelegt. Die Reaktionszone bestand in der Berührungsfläche Kohlenstoffträger-Kola-Phosphat-Preßling.

Die Untersuchung über die Reaktionsgeschwindigkeit von Kolaphosphat mit dem betreffenden Kohlenstoffträger im Grafittiegel unter $N_2$-Atmosphäre fand in dem beschriebenen Ofen in folgender Weise statt:

Die Apparatur wurde innerhalb von 75 min. auf die im Tiegel erforderliche Temperatur von 1350°C aufgeheizt. Die Temperatur wurde pyrometrisch gemessen. Der entstehende Phosphordampf wurde durch einen $N_2$-Strom von 5 l/h in die mit bromhaltiger, konzentrierter Salptersäure gefüllten Vorlagen überführt. Nach der Versuchsdauer von 1 Stunde bei 1350°C wurde der Versuch durch Abschließen der Vorlagen abgebrochen.

Nach Verkochen des Broms und überschüssiger Salpetersäure wurde eine Phosphat-Bestimmung durchgeführt.

Zur Bestimmung der effektiven Reaktivität $R_{eff}$ lag im Grafittiegel der Kohlenstoffträger immer zuunterst, darauf der Kolaphosphat-Preßling. Die Temperatur betrug in allen Fällen 1350°C. An Kohlenstoffträgern wurden eingesetzt: Grafit (Versuch 1), Koks (Versuch 2) und Preßlinge aus Gemischen von Koksgrus (Körnung < 1 cm) und Phosphorofenschlacke (< 0,01 cm). Preßlinge wurden unter Zuhilfenahme von Sulfitablauge oder Wasserlaslösung hergestellt (Versuche 3—9).

Wie aus der nachfolgenden Tabelle hervorgeht, steigt die effektive Reaktivität eines Kohlenstoffträgers mit dem Anteil an Schlacke an. Dabei ist Wasserglas als Bindemittel erheblich wirksamer als Sulfitablauge.

Vergleicht man die effektive Reaktivität eines schlackehaltigen Kohlenstoffträgers mit der von normalem Koks, so erhält man Verbesserungen auf das über 10-fache.

# 0 006 420

Bestimmung der effektiven Reaktivität $R_{eff}$

$$R_{eff} = \frac{\alpha}{(\% \ C / 100) \cdot \rho}$$

| Versuch Nr. | C-Träger | | | Ergebnis | | |
|---|---|---|---|---|---|---|
| | % C | Bindem. | $\rho_0$ | $\alpha^*$ | $R_{eff}$ | $\dfrac{R_{eff}}{R_{eff} \ \text{Koks}}$ |
| 1 | 100 | — | 2,2 | 11,50 | 5,23 | 0,42 |
| 2 | 100 | — | 1,22 | 15,04 | 12,32 | 1 |
| 3 | 80 | Sulfitabl. | 1,34 | 15,93 | 14,86 | 1,21 |
| 4 | 50 | ,, | 1,48 | 16,81 | 22,72 | 1,84 |
| 5 | 20 | ,, | 1,62 | 46,01 | 142,01 | 11,53 |
| 6 | 50 | Sulfitabl. + Wasserglas | 1,48 | 23,01 | 31,10 | 2,52 |
| 7 | 70 | Wasserglas | 1,38 | 47,79 | 49,47 | 4,00 |
| 8 | 50 | ,, | 1,48 | 34,51 | 46,64 | 3,78 |
| 9 | 20 | ,, | 1,65 | 156,63 | 474,64 | 38,53 |

\* Die spezifische Reaktivität $\alpha$ gibt die auf die geometrische Oberfläche das jeweiligen Kohlenstoffträgers bezogene Reaktionsgeschwindigkeit an. Sie wird berechnet als pro Stunde entstandener P, gemessen in mg und bezogen auf die genannte Oberfläche in $cm^2$.

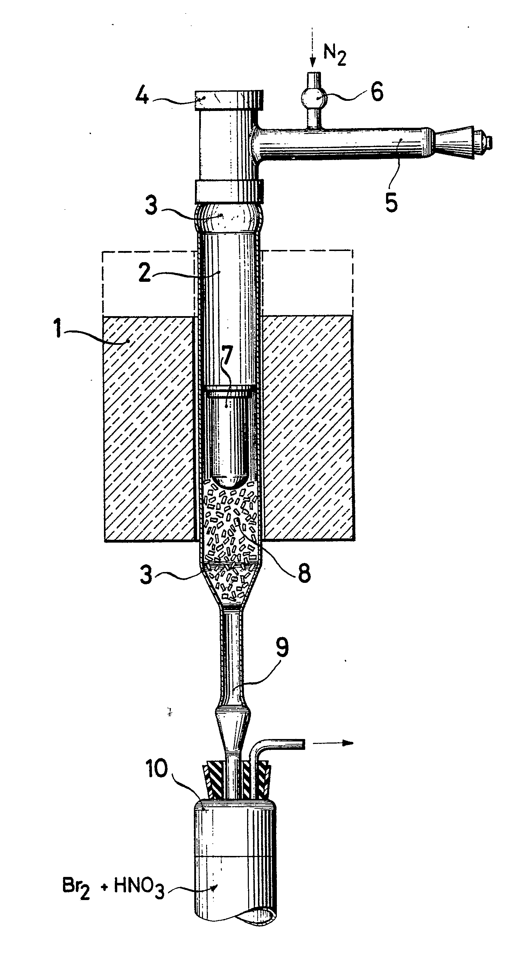

**Patentansprüche**

1. Kohlenstoffträger für elektrothermische Reduktionsprozesse, die unter Bildung einer Schlacke verlaufen, dadurch gekennzeichnet, daß er 5 bis 80 Gewichts% der bei dem betreffenden Reduktionsprozeß anfallenden Schlacke enthält.

2. Kohlenstoffträger nach Anspruch 1, dadurch gekennzeichnet, daß er 20 bis 50 Gewichts% der genannten Schlacke enthält.

3. Kohlenstoffträger nach Anspruch 1 oder 2, dadurch gekennzeichnet, daß er die Schlacke in einer Korngröße kleiner als 6 mm enthält.

4. Verfahren zur Herstellung eines Kohlenstoffträgers für elektrothermische Reduktionsprozesse, die unter Bildung einer Schlacke verlaufen, gemäß einem der Ansprüche 1 bis 3, dadurch gekennzeichnet, daß man eine im wesentlichen aus Kohlenstoff bestehende Komponente mit der bei dem Reduktionsprozeß gebildeten Schlacke vermischt.

5. Verfahren nach Anspruch 4, dadurch gekennzeichnet, daß man durch Pelletisieren oder Briketieren der Mischung der Kohlenstoffkomponente und der Schlacke Formkörper herstellt.

6. Verfahren nach Anspruch 4 oder 5, dadurch gekennzeichnet, daß man die Formkörper unter Verwendung von Bindemitteln herstellt.

7. Verfahren nach einem der Ansprüche 4 bis 6, dadurch gekennzeichnet, daß man als Kohlenstoffkomponente Koksgrus einsetzt.

8. Verfahren nach Anspruch 7, dadurch gekennzeichnet, daß man Koksgrus mit einer Korngröße kleiner als 6 mm einsetzt.

5

9. Verfahren nach Anspruch 4, dadurch gekennzeichnet, daß man zunächst Kohle mit der Schlacke vermischt und die erhaltene Mischung anschließend verkokt, wobei man die Schlacke in einer solchen Menge einsetzt, daß das nach der Verkokung erhaltene Produkt 5 bis 80 Gewichts% an Schlacke enthält.

**Claims**

1. Carbon carrier for use in slag-forming electrothermal reduction processes, the carbon carrier containing 5 to 80 weight % of the particular slag formed in the reduction process.

2. Carbon carrier as claimed in claim 1, containing 20 to 50 weight % of said slag.

3. Carbon carrier as claimed in claim 1 or 2, containing the slag in the form of particles with a size smaller than 6 mm.

4. Process for making a carbon carrier for use in slag-forming electrothermal reduction processes as claimed in any of claims 1 to 3, which comprises mixing a component consisting substantially of carbon with the slag formed in the reduction process.

5. Process as claimed in claim 4, wherein the mixture of carbon material and slag is moulded by pelletizing or briquetting it.

6. Process as claimed in claim 4 or 5, wherein the mouldings are made with the use of binders.

7. Process as claimed in any one of claims 4 to 6, wherein coke breeze is used as the carbon component.

8. Process as claimed in claim 7, wherein the coke breeze is used in the form of particles with a size of less than 6 mm.

9. Process as claimed in claim 4, wherein the carbon material is mixed with the slag and the resulting mixture is subjected to coking, the slag being used in a quantity necessary for the coked material to contain 5 to 80 weight % of slag.

**Revendications**

1. Matière carbonée pour procédés de réduction électrothermiques se déroulant avec formation d'un laitier, caractérisée en ce qu'elle contient de 5 à 80% en poids du laitier formé dans le procédé de réduction question.

2. Matière carbonée selon la revendication 1, caractérisée en ce qu'elle contient de 20 à 50% en poids du laitier en question.

3. Matière carbonée selon la revendication 1 ou 2, caractérisée en ce qu'elle contient le laitier à une dimension de grain inférieure à 6 mm.

4. Procédé de préparation d'une matière carbonée pour procédés de réduction électrothermiques se déroulant avec formation d'un laitier selon l'une des revendication 1 à 3, caractérisé en ce que l'on mélange un composant consistant essentiellement en carbone avec le laitier formé dans le procédé de réduction.

5. Procédé selon la revendication 4, caractérisé en ce que l'on prépare des corps moulés en mettant le mélange du composant carboné et du laitier sous forme de pellets ou de briquettes.

6. Procédé selon la revendication 4 ou 5, caractérisé en ce que l'on prépare les corps moulés en utilisant des liants.

7. Procédé selon l'une des revendications 4 à 6, caractérisé en ce que l'on utilise en tant que composant carboné du poussier de coke.

8. Procédé selon la revendication 7, caractérisé en ce que l'on utilise du poussier de coke à une dimension de grain inférieure à 6 mm.

9. Procédé selon la revendication 4, caractérisé en ce que l'on mélange d'abord du charbon avec le laitier puis on soumet le mélange à cokéfaction en utilisant le laitier en quantité telle que le produit obtenu après cokéfaction contienne de 5 à 80% en poids de laitier.